# FASCICULE DE BREVET EUROPEEN

(11) **EP 2 242 443 B1**
(45) Date de publication et mention de la délivrance du brevet: **23.08.2017**
(21) Numéro de dépôt: 09703138.9
(22) Date de dépôt: 13.01.2009
(51) Int. Cl.: A61C 17/26, A61C 17/34, A46B 13/00

(54) **BROSSE À DENTS À DOUBLE SYSTÈME ROTATIF DE BROSSAGE**
ZAHNBÜRSTE MIT DOPPELDREHBÜRSTENSYSTEM
TOOTHBRUSH WITH DUAL ROTARY BRUSHING SYSTEM

(30) Priorité: 14.01.2008 FR 0800198
(43) Date de publication de la demande: 27.10.2010
(73) Titulaire: Arnoux, Patrick, 13011 Marseille (FR); Ferrer, Jean-Christophe, 13600 La Ciotat (FR)
(72) Inventeur: CAVILLE, Roland, Hongkong (CN); ARNOUX, Patrick, 13011 Marseille (FR); FERRER, Jean-Christophe, 91370 Verrieres le Buisson (FR)
(74) Mandataire: Chaffraix, Jean
(86) Numéro de dépôt international: PCT/FR2009/050044
(87) Numéro de publication internationale: WO 2009/092957

(56) Documents cités:
- EP-B- 0 725 602
- WO-A-87/00405
- DE-B3-102005 007 617
- FR-A- 2 293 890

## Description

La présente invention a pour objet une brosse à dents ayant deux brosses rotatives pour le brossage, en particulier, une brosse à dents à double système rotatif de brossage
Elle concerne les domaines de l'hygiène buccale et des soins dentaires, en particulier humains, mais peut tout à fait s'adapter à un usage vétérinaire.

L'hygiène buccale est en lien direct avec la manière dont le brossage des dents est effectué. En effet, tous les spécialistes s'accordent à dire que le brossage circulaire est inefficace et que pour être efficace, le brossage des dents doit se faire de la gencive vers l'extérieur de la dent, c'est-à-dire de haut en bas pour la mâchoire supérieure et de bas en haut pour la mâchoire inférieure.

Le choix d'une brosse à dents se fait suivant plusieurs critères, par exemple l'âge, l'anatomie dentaire, l'état parodontal, la dureté des poils... Un grand nombre de types de brosses à dents différents sont actuellement disponibles sur le marché. Il existe des brosses à dents classiques manuelles, des brosses à dents électriques, à mouvements vibrants, alternatifs ou rotatifs. Par exemple, le brevet européen EP 0488971 décrit une brosse à dents électrique comportant deux brosses contrarotatives agencées pour agir sur le même flan de l'arcade dentaire. Il est bien évident que dans ce cas, si l'une des brosses travaille toujours dans le bon sens de brossage, l'autre agit obligatoirement dans le mauvais sens.

Aucun de ces appareils ne permet de garantir un brossage s'effectuant toujours dans le meilleur sens, à moins d'intégrer un système automatique inversant le sens de rotation en fonction de la position du dispositif dans la bouche, un tel système s'avérant complexe, onéreux et généralement peu fiable.

Pour pallier ces inconvénients, ont été développés des appareils de brossage de dents comportant des brosses cylindriques à axes parallèles, ayant des mouvements de rotation en sens inverse et permettant d'insérer entre elles les dents à nettoyer de telle façon que chaque côté de celles-ci soit brossé dans le sens de la racine vers l'extrémité. Par exemple, la demande de brevet FR 2 489 120 décrit un appareil de brossage des dents dont les brosses cylindriques sont écartées d'une distance constante supérieure à la largeur maximale d'une dent (cinq millimètres environ) et libres à leur extrémité distale, c'est-à-dire celle éloignée du manche dans lequel est logé le système d'entraînement en rotation desdites brosses par leur autre extrémité.

Le brevet CH 644256 décrit un appareil de brossage dans lequel les brosses sont munies de tiges de section conique en matière synthétique dont l'élasticité permet d'obtenir une certaine pression contre les dents que l'on enserre entre elles.

Ces types d'appareils comprennent nécessairement un moyen de contrôle du sens de brossage, soit par un inverseur de rotation du moteur d'entraînement, soit par des raccords coudés imposant une position déterminée des brosses par rapport à l'arcade dentaire à nettoyer.

Le brevet EP 0108097 décrit un appareil dé brossage de dents possédant, logés dans un carter bien enveloppant, plusieurs modules interchangeables dont un possède trois brosses cylindriques à axes parallèles de grands diamètres dont la brosse médiane permet le brossage du dessus des dents. Cependant, un tel dispositif présente l'inconvénient du manque d'efficacité car la brosse médiane a un sens de rotation antagoniste à celui d'une des brosses latérales et sa présence détermine une certaine hauteur d'application de l'appareil ce qui ne permet pas toujours une action efficace sur toute la hauteur de la dent et notamment jusqu'à la gencive.

En plus des inconvénients évoqués ci-dessus, ces appareils connus ont pour la plupart un écartement de brosse constant, ce qui d'une part nécessite de proposer plusieurs têtes ou plusieurs appareils suivant l'utilisateur (enfants, adultes...) et d'autre part ne permet pas pour un même utilisateur une efficacité de brossage homogène pour toute sa dentition compte tenu des différences d'épaisseur de dents (molaires, prémolaires, canines,...) ; et dans les appareils du type décrit dans le brevet CH 644256 qui sont les seuls à permettre un écartement des brosses du fait du montage de celles-ci sur des arbres flexibles mais tenus à leur seule embase, outre l'inconvénient du contrôle de sens de brossage évoqué précédemment, ils ne permettent pas un appui homogène sur les dents puisque leur écartement ne peut pas s'adapter à la largeur des dents sur toute leur longueur et une telle disposition induit de toute façon des efforts de flexion et de cisaillement sur les arbres d'entraînement qui sont alors endommagés à la longue.

Pour tenter de résoudre ces difficultés, la demande de brevet FR 2662598 a été reprise et l'appareil de brossage décrit dans cette demande de brevet est du type de celui décrit dans la demande FR 2489120. Il comporte deux brosses contrarotatives d'axes rigides, libres à leurs extrémités distales et maintenues par celles opposées assurant leur entraînement. Elles sont contenues dans un carter qui comprend un guide dans lequel l'une des extrémités des brosses est déplaçable en écartement de l'autre suivant un arc de cercle assurant la continuité de son entraînement autour et par un engrenage, et grâce à un dispositif à câble et à ressort. Cet appareil a alors pour but de s'adapter à toute épaisseur de dent et de maintenir une pression constante sur celle-ci et d'une manière quasi homogène sur toute la longueur des brosses qui doivent pour cela rester quasi parallèles pendant le brossage. Cependant, un tel dispositif manque de fiabilité, de facilité d'utilisation, particulièrement lors de la mise en place dans la bouche du fait de sa taille et par conséquent il n'incite pas à l'utilisation.

Le brevet EP 0 725 602 décrit une brosse à dents de ce type à savoir une brosse à dents mécanique à double système rotatif de brossage comportant un corps formant manche et une tête fixée sur ledit manche, laquelle tête étant pourvue de deux brosses contrarotatives de forme cylindrique, adjacentes, d'axes sensiblement parallèles, supportées au moins chacune à leur extrémité distale par un palier et entraînées chacune par un arbre flexible situé dans la tête et supporté au moins par un palier, les arbres portant lesdites brosses étant flexibles et chacun desdits deux paliers qui les supportent, l'un situé à leur extrémité et l'autre du côté du corps étant monté sur un support permettant l'écartement des deux brosses l'une par rapport à l'autre et assurant alors le rapprochement de l'une vers l'autre par effet de rappel. Ces supports permettent donc l'écartement des deux brosses et assurent également leur rapprochement par effet de ressort dû à l'élasticité du support commun aux deux brosses. Ces supports sont montés dans un carter plus ou moins ouvert prolongeant la tête du dispositif et qui entoure au moins partiellement les brosses.

Bien que de telles brosses à dents présentent de nombreux avantages puisqu'elles permettent notamment d'assurer un brossage ayant toujours lieu dans le sens idéal, et d'effectuer simultanément le nettoyage des deux côtés de l'arcade dentaire, ce qui entraîne une réduction certaine du temps de brossage, elles possèdent néanmoins certains inconvénients, en particulier liés à la forme des supports de brosses et du carter qui entoure au moins partiellement les brosses ou même à cause des bras qui portent les brosses.

En effet, on a pu se rendre compte que la présence de ce carter ou de ces bras génère un encombrement dans la bouche qui peut se révéler incommodant pour l'utilisateur.

Pour résoudre un tel inconvénient, il a été proposé par les inventeurs une brosse à dents du type décrit ci-dessus dans lequel l'encombrement spatial de la brosse a été diminué tout en préservant l'ensemble de ces qualités. En effet, cette brosse à dents mécanique à double système rotatif de brossage propose de supprimer le carter en le remplaçant de manière avantageuse par un support permettant l'écartement des deux brosses l'une par rapport à l'autre et assurant alors le rapprochement de l'une vers l'autre. Ledit support comporte quatre branches flexibles, autour d'une pièce centrale servant à la fixation dudit support sur la tête constituée d'un bras unique. Dans cette pièce centrale, on trouve soit un orifice encliquetable sur un plot en saillie porté par la tête, soit, de préférence, deux orifices : un orifice formant manchon permettant le passage de la tête et un autre orifice permettant l'encliquetage de la tête dans cette partie centrale grâce à l'engagement, dans ledit orifice de la partie centrale, d'un plot ménagé en saillie sur ledit bras unique.

Ainsi, de manière avantageuse, la pièce centrale permet de fixer facilement ledit support sur la tête en forme d'un bras unique de sorte que la brosse à dents ainsi constituée présente un encombrement réduit et permette donc une utilisation plus agréable.

Cependant, bien que ce dispositif améliore nettement la capacité de brossage des dents du fait de sa dimension réduite et de sa maniabilité en regard des brosses à dents de l'art antérieur exposé ci-dessus, il présente néanmoins l'inconvénient de son manque d'adaptabilité et de sa flexibilité limitée dans la bouche et sur les dents de l'utilisateur. Ces inconvénients nuisent au brossage optimal de la denture.

Ainsi, la présente invention a pour but de résoudre un tel inconvénient en proposant une brosse à dents de ce type ayant une flexibilité, une maniabilité accrue grâce à un degré de liberté de pivotement supérieur des brosses vis-à-vis des dents.

A cet effet, la présente invention a pour objet une brosse à dents mécanique à double système rotatif de brossage comportant un corps formant manche et une tête fixée sur ledit manche, laquelle tête est pourvue de brosses contrarotatives de forme cylindrique, adjacentes, d'axes sensiblement parallèles, supportées chacune au moins à leur extrémité distale par un palier et entraînées chacune par un arbre au niveau de la tête, lesdits arbres étant flexibles et chacun des dits deux paliers qui les supportent, l'un situé à leur extrémité distale et l'autre du côté du corps, étant monté sur un support, permettant l'écartement des deux brosses l'une par rapport à l'autre et assurant alors le rapprochement de l'une vers l'autre, le support comportant quatre branches flexibles, autour d'une pièce centrale servant à la fixation dudit support sur la tête constituée d'un bras unique, caractérisé en ce que le support est fixé sur la tête par une liaison autorisant son pivotement autour de sa fixation sur la tête.

On offre ainsi une meilleure maniabilité de la brosse à dents lors du brossage et donc un brossage plus efficace. En effet, le pivotement autorisé du support par rapport à l'axe longitudinal de la tête permet une meilleure maniabilité dans la bouche.

Selon la forme de réalisation préférée de l'invention, la pièce centrale comporte deux orifices, le premier orifice servant au passage de la partie distale de la tête et le second orifice servant à l'encliquetage de la pièce centrale sur un plot ménagé en saillie sur le bras unique constituant la tête de la brosse à dents, et un jeu est ménagé entre la partie distale de la tête et le premier orifice dans lequel elle s'engage.

Ainsi, une fois la fixation finalisée par le plot de la tête encliqueté dans le second orifice du support, le jeu qui existe entre l'orifice formant manchon d'engagement de la tête et la tête à son extrémité distale vers la pièce centrale autorise un pivotement du support par rapport à la tête autour dudit plot.

Ainsi, ce jeu peut être obtenu par un support présentant un orifice plus large que la tête qui le traverse, et/ou par la tête qui présente une forme plus effilée à son extrémité distale. En outre, la tête peut comprendre deux évidements, respectivement un de chaque côté latéral de la tête dans sa partie distale, au-dessous du plot permettant sa fixation et au niveau de sa partie engagée dans l'orifice du support formant manchon.

Ceci offre une amplitude de pivotement du support vis-à-vis de la tête qui le supporte, ce qui permet un degré de liberté de pivotement supérieur des deux brosses et donc une meilleure maniabilité et ainsi une meilleure efficacité de brossage des dents.

Aussi, selon l'une ou l'autre ou les deux caractéristiques de cette forme de réalisation, le support peut ainsi pivoter réellement de manière ample autour du plot porté par la tête.

Ceci est possible particulièrement par le fait qu'une partie de deux branches flexibles orientées vers le manche de la brosse à dents soit évidée dans leur partie interne respective, ceci permettant encore plus le pivotement du support autour du plot de fixation en offrant un degré de liberté de pivotement supérieur du support vis-à-vis de la tête le portant.

De manière particulièrement avantageuse, lorsque la brosse à dents selon la présente invention possède la combinaison des branches du support présentant des évidements et de la tête présentant également des évidements, un pivotement particulièrement important peut être obtenu car un large espace est libéré entre la tête et les branches du support offrant ainsi un liberté de mouvements plus grande. Les deux branches orientées vers le manche de la brosse à dents pourront se loger dans les évidements agencés sur ladite partie distale de la tête. Lors du pivotement maximal du support vis-à-vis de la tête, cette partie interne des branches orientées vers le manche de la brosse à dents viendra en contact et en butée contre lesdits évidements respectifs de chaque côté latéral de la tête. Plus l'extrémité de la tête sera fine, effilée, fuselée, plus la liberté de pivotement du support portant les brosses autour du plot porté par la tête sera grande. Ces évidements permettront un mouvement et un éventail de positionnement des brosses beaucoup plus larges que ceux offerts non seulement par les brosses à dents de l'art antérieur mais également par une brosse à dents selon l'invention ne comportant que les évidements au niveau de la partie centrale et des deux branches orientées vers le manche.

Ainsi, de manière avantageuse, la pièce centrale permet de fixer facilement ledit support sur la tête en forme d'un bras unique de sorte que la brosse à dents ainsi constituée présente un encombrement réduit et permet donc une utilisation plus agréable mais surtout une maniabilité accrue. Le brossage des dents sera d'autant plus efficace que les brosses pourront s'orienter en fonction des reliefs rencontrés dans la bouche de l'utilisateur et adapter leur direction sans être gênées par l'encombrement de la tête qui les porte.

Les paires de branches du support sont ménagées de chaque côté de la pièce de fixation centrale, lesdites paires de branches se présentant sensiblement sous la forme d'un U dont les extrémités proximales, situées proches du corps, et distales, situées de l'autre côté du corps représentent chacune un palier encadrant une brosse rotative et chacun desdits deux paliers proximaux supportant chacun un arbre flexible.

Ainsi, le support selon la présente invention montre sensiblement une forme en X lorsqu'on le regarde de dessus, les brosses orientées vers le sol.

De préférence, ledit support est réalisé sous forme d'une seule pièce en un matériau souple tel qu'un élastomère thermoplastique, en particulier un élastomère thermoplastique sans plastifiant, tel le polyéther bloc amide connu sous la dénomination commerciale Pebax.

On décrira maintenant l'invention plus en détail en référence au dessin dans lequel :
La figure 1 représente une vue en perspective latérale d'une tête de brosse à dents selon un exemple de réalisation de l'invention ;
La figure 2 représente une vue en perspective du dessus de la tête de la figure 1 ;
La figure 3 représente une vue en perspective avant de la tête de la figure 1 ; et
La figure 4 représente une vue en perspective arrière de la tête de la figure 1.
La figure 5 représente une vue de dessus de la tête de la figure 1 lorsque le support est dans sa position de pivotement maximal.

Le dispositif ou brosse selon la présente invention comporte un corps creux servant de manche (non représenté) dans lequel on loge les moyens d'alimentation (transformateur pour une alimentation extérieure et/ou accumulateur électrique et/ou batterie) ainsi que le moteur d'entraînement des brosses 2, 2'.

Le dispositif comporte en outre une tête 1 qui peut être déconnectée, désaccouplée du corps creux pour être interchangeable. Cette tête 1 est pourvue à son extrémité de deux brosses rotatives 2, 2' de forme cylindrique, adjacentes et d'axes sensiblement parallèles.

Le système d'entraînement des brosses 2, 2' est similaire à celui décrit dans EP 0 725 602 et ne sera pas repris ici plus en détails.

Chaque brosse 2, 2' est supportée au moins à son extrémité distale par un palier 3, 3' et entraînées chacune par un arbre 4, 4' au niveau de la tête 1, lesdits arbres 4, 4' étant flexibles. Chacun des dits deux paliers qui supportent les arbres 4, 4', l'un 3, 3' situé à leur extrémité distale, correspondant au palier de la brosse également, et l'autre proximal 5, 5' du côté du corps, est monté sur un support 6 permettant l'écartement des deux brosses 2, 2' l'une par rapport à l'autre et assurant alors le rapprochement de l'une vers l'autre.

Ce support 6 comporte quatre branches flexibles 6a, 6b, 6c et 6d positionnées autour d'une pièce centrale 6e servant à la fixation dudit support 6 sur la tête 1.

De manière avantageuse, la pièce centrale 6e permet de fixer ledit support 6 sur la tête 1 et ceci grâce à la présence sur ladite pièce centrale 6e de deux orifices 7 et 7'. Le premier orifice 7 formant manchon sert à l'introduction de la tête 1 dans la pièce centrale 6 e. Le second orifice 7' de la pièce centrale 6e permet l'enclipsage ou encliquetage sur le plot la ménagé en saillie sur le bras unique constituant la tête de la brosse à dents et sur lequel la pièce centrale 6 e s'engage. Les orifices 7et 7' se situent de préférence dans deux plans perpendiculaires l'un par rapport à l'autre.

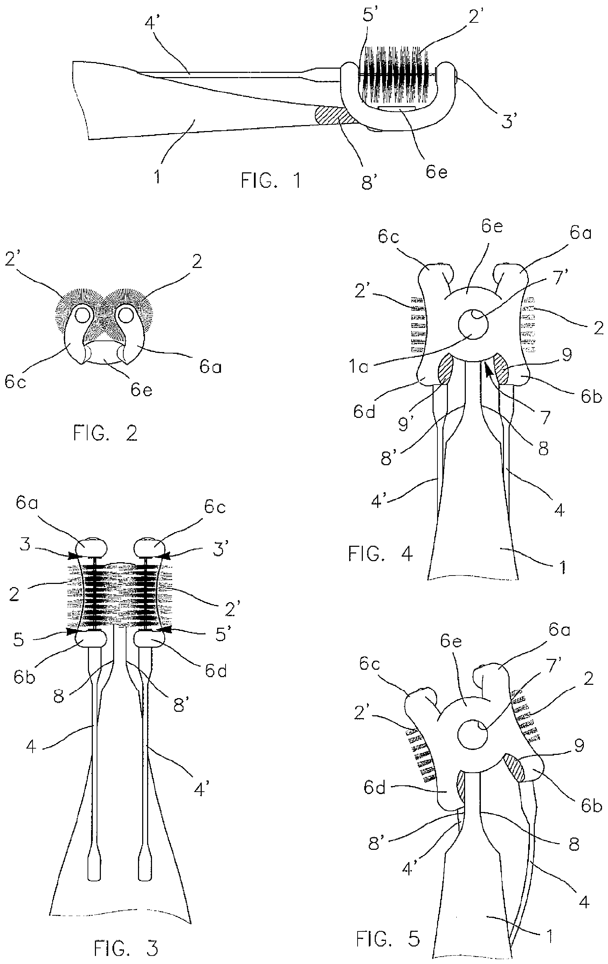

De manière à générer le jeu autorisant le pivotement entre le support 6 et la tête 1, ce support 6 comporte une creusure de chaque côté de l'orifice 7 élargissant encore cet orifice 7 par rapport à la tête engagée dedans ainsi qu'au niveau de chacune des parties internes des branches 6b et 6d pour former un évidement 9, 9' permettant un pivotement plus ample dudit support 6 vis-à-vis de la tête 1. Ces évidements 9, 9' sont conçus pour générer et accroître la liberté et l'amplitude du mouvement du support 6 par rapport à la tête 1. Ceci est illustré sur la figure 5.

Cette tête 1 se présente de préférence sous la forme d'un bras unique de forme effilée à son extrémité distale et possédant en outre de préférence des évidements 8, 8' de chaque côté de la partie effilée distale située entre les branches 6b et 6d du support 6 et engagée dans l'orifice 7. Ces évidements 8, 8' permettent d'accroître encore la possibilité de mouvement du support 6 par rapport à la tête 1. Le pivotement des brosses pourra ainsi être plus ample car il y aura moins de contrainte et une butée entre les branches et la tête 1 moins fréquente dans cette zone située entre les branches 6b et 6d. Ceci est illustré sur la figure 5. Dans le cas d'un pivotement maximal du support 6 par rapport à la tête 1, comme illustré sur la figure 5, la branche 6d recouvre partiellement la partie effilée de la tête 1, ceci étant dû au fait que cette partie de la tête 1 se loge dans l'évidemment 9' de la branche 6d.

Sur cette figure 5, il est également possible de voir que lorsque le support 6 est dans sa position pivotée maximale, les bras 4, 4' fléchissent pour adapter au mieux le mouvement.

Cette tête 1 présente également à son extrémité distale un plot la ménagé en saillie dudit bras perpendiculairement à l'axe longitudinal de la tête. Ce plot la est prévu pour se loger dans l'orifice 7' de la partie centrale 6^{e}, le pivotement du support 6 s'effectuant autour dudit plot 1a.

Une paire de branches 6a,6b et 6c,6d du support 6 est ménagée de chaque côté de la pièce centrale de fixation 6e. Chaque paire de branches 6a,6b ;6c,6d se présente sensiblement sous la forme d'un U, chacun des dits deux paliers qui supportent les arbres flexibles 4, 4', l'un 3, 3' situé à leur extrémité distale et l'autre 5, 5' du côté du corps étant montés aux extrémités du U.

La base de chaque U est solidaire de la pièce centrale 6e de sorte que le U s'étend dans un plan sensiblement perpendiculaire à la pièce centrale 6e. Ainsi, le support 6 présente sensiblement une forme en X dont les extrémités sont flexibles permettant le rapprochement et l'écartement des brosses 2, 2' fixées dessus.

De préférence, chaque branche d'un U peut en outre être ménagée courbe vers l'intérieur de la tête 1, pour accentuer l'effet de rapprochement des brosses 2, 2' en position repos de la brosse tout en autorisant leur écartement du fait de la flexibilité de chaque branche mais avec un effet de rappel élastique qui maintient ainsi lors du brossage une pression des brosses 2, 2' sur les dents. Ce rappel élastique peut être avantageusement obtenu grâce au matériau dans lequel le support 6 est réalisé.

## Revendications

1. Brosse à dents mécanique à double système rotatif de brossage comportant un corps formant manche et une tête (1) fixée sur ledit manche, laquelle tête (1) est pourvue de brosses (2, 2') contrarotatives de forme cylindrique, adjacentes, d'axes sensiblement parallèles, supportées chacune au moins à leur extrémité distale par un palier (3, 3') et entraînées chacune par un arbre (4, 4') au niveau de la tête (I), lesdits arbres (4, 4') étant flexibles et chacun des dits deux paliers qui les supportent, l'un (3,3') situé à leur extrémité distale et l'autre (5,5') du côté du corps, étant monté sur un support (6), permettant l'écartement des deux brosses (2, 2') l'une par rapport à l'autre et assurant alors le rapprochement de l'une vers l'autre, le support (6) comportant quatre branches flexibles (6a,6b,6c,6d), autour d'une pièce centrale (6e) servant à la fixation dudit support (6) sur la tête (1) constituée d'un bras unique, **caractérisé en ce que** le support (6) est fixé sur la tête (1) par une liaison autorisant son pivotement autour de sa fixation sur la tête (1).

2. Brosse à dents mécanique à double système rotatif de brossage selon la revendication 1, **caractérisée en ce que** la pièce centrale comporte deux orifices, le premier orifice (7) formant manchon servant au passage de la partie distale de la tête (1) et le second orifice (7') servant à l'encliquetage de la pièce centrale (6e) sur un plot (la) ménagé en saillie sur le bras unique (1) constituant la tête de la brosse à dents, et **en ce qu'**un jeu est ménagé entre la partie distale de la tête (1) et le premier orifice (7) dans lequel elle s'engage.

3. Brosse à dents selon la revendication 2,
**caractérisée en ce que** le premier orifice (7) formant manchon de la pièce centrale (6e) est plus large que la partie distale de la tête (1) le traversant et/ou la tête (1) est effilée à son extrémité distale, vers la pièce centrale (6e).

4. Brosse à dents selon la revendication 3,
**caractérisée en ce que** la tête, à son extrémité distale, comprend deux évidements (8, 8'), respectivement un de chaque côté latéral de la tête (1) dans sa partie distale.

5. Brosse à dents selon l'une des revendications 3 à 4,
**caractérisée en ce que** les branches flexibles (6b, 6d) du support (6) orientées vers le manche de la brosse à dents présentent respectivement un évidement (9, 9') dans leur partie interne permettant le pivotement du support (6) autour du plot (la).

6. Brosse à dents selon l'une des revendications 1 à 5,
**caractérisée en ce qu'**une paire de branches (6a,6b ; 6c,6d) du support (6) est ménagée de chaque côté de la pièce de fixation (6e).

7. Brosse à dents selon la revendication 6,
**caractérisée en ce que** chaque paire de branches (6a,6b ; 6c,6d) se présente sensiblement sous la forme d'un U, chacun des dits deux paliers qui supportent les arbres flexibles (4, 4'), l'un (3, 3') situé à leur extrémité distale et l'autre (5, 5') du côté du corps étant montés aux extrémités du U.

8. Brosse à dents selon la revendication 7,
**caractérisée en ce que** la base du chaque U est solidaire de la pièce centrale (6e) de sorte que le U s'étend dans un plan sensiblement perpendiculaire à la pièce centrale (6e), le support (6) présentant sensiblement une forme en X dont les extrémités sont flexibles permettant le rapprochement et l'écartement des brosses (2, 2') fixées dessus.

9. Brosse à dents selon l'une des revendications précédentes 7 et 8,
**caractérisée en ce que** chaque branche (6a, 6b, 6c, 6d) d'un U est ménagée courbe vers l'intérieur de la tête (1).

10. Brosse à dents selon l'une des revendications précédentes,
**caractérisée en ce que** ledit support (6) est réalisé sous forme d'une seule pièce en un matériau souple tel qu'un élastomère thermoplastique, en particulier un élastomère thermoplastique sans plastifiant, tel le polyéther bloc amide connu sous la dénomination commerciale Pebax.

## Patentansprüche

1. Mechanische Zahnbürste mit Doppeldrehbürstensystem bestehend aus einem Schaft und einem auf dem Schaft befestigten Kopf (1), wobei der Kopf (1) mit gegenläufigen zylindrischen nebeneinander liegenden Bürsten (2, 2') mit im Wesentlichen parallelen Achsen versehen ist, die jeweils mindestens an ihrem distalen Ende von einem Lager (3, 3') getragen und jeweils in Kopfhöhe (1) von einer Welle (4, 4') angetrieben werden, wobei besagte Wellen (4, 4') biegsam sind und jedes der beiden Lager, das sie trägt, eines (3, 3') an ihrem distalen Ende und das andere (5, 5') an der Seite des Körpers, auf einer Halterung (6) montiert ist, der das Auseinanderspreizen der beiden Bürsten (2, 2') ermöglicht und somit die gegenseitige Annäherung gewährleistet, wobei die Halterung (6) vier biegsame Bügel (6a, 6b, 6c, 6d) umfasst, die um ein mittleres Teil (6e) angeordnet sind und zur Befestigung der besagten Halterung (6) am Kopf (1) dienen, wobei das mittlere Teil aus einem einzigen Arm besteht, **dadurch gekennzeichnet, dass** die Halterung (6) auf dem Kopf (1) mittels einer Verbindung fixiert ist, die dessen Drehung um seine Befestigung am Kopf (1) ermöglicht.

2. Eine mechanische Zahnbürste mit Doppeldrehbürstensystem nach Anspruch 1, **dadurch gekennzeichnet, dass** das mittlere Teil zwei Öffnungen aufweist, wobei die erste Öffnung (7) einen Schaft bildet, der zum Durchführen des distalen Teils des Kopfes (1) dient, und die zweite Öffnung (7'), die dem Einrasten des mittleren Teils (6e) auf einem Block (1a) dient, der auf dem Einheitsarm (1) vorstehend angeordnet ist, welcher den Kopf der Zahnbürste bildet, und dadurch, dass zwischen dem distalen Teil des Kopfes (1) und der ersten Öffnung (7), in welches er einrastet, ein Spiel vorgesehen ist.

3. Zahnbürste nach Anspruch 2, **dadurch gekennzeichnet, dass** die erste Öffnung (7), die den Schaft des mittleren Teils (6e) bildet, breiter ist als der distale Teil des Kopfes (1), der durch ihn durchführt und/oder der Kopf (1) an seinem distalen Ende zum mittigen Teil hin (6e) schlank zuläuft.

4. Zahnbürste nach Anspruch 3, **dadurch gekennzeichnet, dass** der Kopf an seinem distalen Ende zwei Aussparungen (8, 8') jeweils seitlich des Kopfes (1) an seinem distalen Teil aufweist.

5. Zahnbürste nach einem der Ansprüche 3 bis 4, **dadurch gekennzeichnet, dass** die biegsamen Bügel (6b, 6d) der Halterung (6), die zum Schaft der Zahnbürste hin gerichtet ist, jeweils im inneren Teil eine Aussparung (9, 9') aufweisen, die das Drehen der Halterung (6) um den Block (1a) ermöglicht.

6. Zahnbürste nach einem der Ansprüche 1 bis 5, **dadurch gekennzeichnet, dass** an jeder Seite des Befestigungsteils (6e) ein Paar Bügel (6a, 6b; 6c, 6d) der Halterung (6) angeordnet ist.

7. Zahnbürste nach einem der Ansprüche 6, **dadurch gekennzeichnet, dass** jedes Paar Bügel (6a, 6b; 6c, 6d) im Wesentlichen eine U-Form aufweist, wobei jedes der beiden Lager, das die biegsamen Wellen (4, 4') trägt, eine (3, 3') an ihrem distalen Ende und die andere (5, 5') an der Seite des Körpers, an den Enden des U montiert sind.

8. Zahnbürste nach Anspruch 7, **dadurch gekennzeichnet, dass** die Basis jedes U fest mit dem mittleren Teil (6e) verbunden ist, so dass sich das U auf einer im Wesentlichen senkrechten Ebene zum mittleren Teil (6e) erstreckt, wobei die Halterung (6) im Wesentlichen eine X-Form aufweist, deren Enden biegsam sind und die Annäherung oder Entfernung der darauf befestigen Bürsten (2, 2') ermöglichen.

9. Zahnbürste nach einem der Ansprüche 7 und 8, **dadurch gekennzeichnet, dass** jeder Bügel (6a, 6b, 6c, 6d) eines U mit einer Krümmung zum Kopfinneren angeordnet ist.

10. Zahnbürste nach einem der vorhergehenden Ansprüche, **dadurch gekennzeichnet, dass** besagte Halterung (6) in Form eines einzigen Teils aus einem nachgiebigen Material wie zum Beispiel einem thermoplastischen Elastomer, insbesondere einem thermoplastischen Elastomer ohne Weichmacher, wie z.B. Polyether-Blockamid, bekannt unter dem Handelsnamen Pebax, hergestellt ist.

## Claims

1. A mechanical toothbrush with a dual rotary brushing system, comprising a body forming a handle and a head (1) fixed on said handle, which head (1) is provided with adjacent contra-rotating brushes (2, 2') which have a cylindrical shape and substantially parallel axes, each of them being supported at least at their distal end by a bearing (3, 3') and each being driven by a shaft (4, 4') in the area of the head (1), with said shafts (4, 4') being flexible, and each of said two bearings that support them, one (3, 3') of which is positioned at their distal end and the other one (5, 5') on the body side, being mounted on a support (6) enabling the two brushes (2, 2') to move away from each other and then ensuring that they move towards each other, with the support (6) comprising four flexible branches (6a, 6b, 6c, 6d) around a central component (6e) used for fixing said support (6) on the head (1) composed of a single arm, **characterized in that** the support (6) is fixed on the head (1) through a link which enables the pivoting thereof about its point of fixation to the head (1).

2. A mechanical toothbrush with a dual rotary brushing system according to claim 1, **characterized in that** the central component comprises two holes, with the first hole (7) forming a sleeve for the passage of the distal portion of the head (1) and the second hole (7') for snapping the central component (6e) onto a stud (1a) formed projecting on the single arm (1) composing the head of the toothbrush, and **in that** clearance is provided between the distal portion of the head (1) and the first hole (7) which it engages in.

3. A toothbrush according to claim 2, **characterized in that** the first hole (7) forming a sleeve of the central component (6e) is wider than the distal portion of the head (1) which goes therethrough and/or the distal end of the head (1) is tapered, towards the central component (6e).

4. A toothbrush according to claim 3, **characterized in that** the distal end of the head comprises two recesses (8, 8'), respectively one on each lateral side of the head (1) in the distal portion thereof.

5. A toothbrush according to one of claims 3 to 4, **characterized in that** the inner portion of the flexible legs (6b, 6d) of the support (6) facing the handle of the toothbrush respectively have a recess (9, 9') enabling the pivoting of the support (6) around the stud (1a).

6. A toothbrush according to one of claims 1 to 5, **characterized in that** a pair of legs (6a, 6b; 6c, 6d) of the support (6) is provided on each side of the fixing part (6e).

7. A toothbrush according to claim 6, **characterized in that** each pair of legs (6a, 6b; 6c, 6d) is substantially U-shaped, with each one of said two bearings which support the flexible shafts (4, 4'), with one (3, 3') being positioned at the distal end thereof and the other one (5, 5') on the body side thereof being mounted at the ends of the U.

8. A toothbrush according to claim 7, **characterized in that** the base of each U is made integral with the central component (6) so that the U extends in a plane substantially perpendicular to the central component (6e), with the support (6) being substantially X-shaped, the ends of which are flexible thus enabling the brushes (2, 2') fixed thereon to move towards/away from one another.

9. A toothbrush according to one of preceding claims 7 and 8, **characterized in that** each leg (6a, 6b, 6c, 6d) of a U is provided bending towards the inside of the head (1).

10. A toothbrush according to one of the preceding claims, **characterized in that** said support (6) is formed as one piece from a flexible material such as a thermoplastic elastomer, in particular a plasticizer-free thermoplastic elastomer, such as polyether block amide known under the trade name Pebax.
